# EUROPÄISCHE PATENTSCHRIFT

(11) **EP 2 290 256 B1**
(45) Veröffentlichungstag und Bekanntmachung des Hinweises auf die Patenterteilung: **10.10.2012**
(21) Anmeldenummer: 10173096.8
(22) Anmeldetag: 17.08.2010
(51) Int. Cl.: F16D 55/2265, F16D 55/227, F16D 65/14

(54) **Sattelbremse für ein Schienenfahrzeug mit elastischer Bremssattelaufhängung**
Calliper brake for a rail vehicle with elastic brake calliper suspension
Frein à étrier pour un véhicule sur rails doté d'une suspension d'étrier de freinage élastique

(30) Priorität: 27.08.2009 DE 102009039109
(43) Veröffentlichungstag der Anmeldung: 02.03.2011
(73) Patentinhaber: KNORR-BREMSE Systeme für Schienenfahrzeuge GmbH, 80809 München (DE)
(72) Erfinder: Lehmair, Martin, 80935, München (DE); Nies, Eduard, 82178, Puchheim (DE); Waldstein, Martin, 80804, München (DE)
(74) Vertreter: Mattusch, Gundula

(56) Entgegenhaltungen:
- EP-A1- 1 519 069
- DE-C1- 3 540 810
- DE-U1-202008 006 779

## Beschreibung

Die vorliegende Erfindung betrifft eine Sattelbremse für ein Schienenfahrzeug, umfassend eine drehfest mit einem Rad rotierende Bremsscheibe, die mit einem ortsfest seitens des Fahrgestells angeordneten Bremssattel zum druckmittelunterstützten Bremsen zusammenwirkt, der zum Ausgleich von Relativbewegungen zwischen der Befestigungsstelle des Bremssattels und den Reibflächen der Bremsscheibe über mindestens zwei parallel zueinander beabstandete Schwimmbolzen an einem fahrgestellseitig fixierten Bremssattelrahmen entlang einer parallel zur Radachse verlaufenden Y-Achse verschiebbar angebracht ist. Darüber hinaus betrifft die Erfindung auch ein Schienenfahrzeug mit einem solchen druckmittelbetriebenen Bremssystem.

Die hier interessierenden Sattelbremsen sind speziell ausgebildete Scheibenbremsen, die im Allgemeinen eine umlaufende Bremsscheibe, Bremsbelagträger mit darauf angeordnetem Belagmaterial und mindestens einer axial beweglichen druckmittelunterstützten Betätigungseinrichtung zum axialen Verschieben der Belagträger aufweisen, wodurch beim Bremsen das Belagmaterial der Bremsscheibe zur Anlage kommt. Die Betätigungsvorrichtung sowie die Belagträger sind an einem Bremssattel montiert. Beim Bremssattel werden unterschiedliche Sattelbauarten unterschieden. So ist ein Festsattel axial unbeweglich und umfasst zwei einander gegenüberliegende Betätigungseinrichtungen. Ein Schwimmsattel kommt mit einer einzigen axial bewegbaren Betätigungseinrichtung aus, da der Sattel als solcher axial bewegbar gelagert ist. Beim Schwimmrahmensattel ist die Axialbeweglichkeit in den Rahmen selbst verlagert. Der Rahmen wird auf zwei Schwimmbolzen eines Trägers gelagert, der seinerseits wiederum wie ein Festsattel befestigt ist. Die vorliegende Erfindung widmet sich einer technischen Verbesserung der Bremssattelaufhängung eines Schwimmsattels.

Aus der DE 197 45 775 A1 geht eine Sattelbremse mit einer elastischen Bremssattelaufhängung hervor. Die Sattelbremse besteht im Wesentlichen aus einem Bremssattel, der in einer Führung, die hier als Stehbolzen ausgeführt ist, verschieblich geführt ist. Die Drehachse der Bremsscheibe verläuft parallel zu den Stehbolzen, so dass sich der Bremssattel gegenüber der Bremsscheibe zentrieren kann. Die Sattelbremse umfasst weiterhin einen druckmittelbetätigbaren Kolben, der an dem der Bremsscheibe zugewandten Ende auf einen Bremsbelag wirkt. Ein weiterer Bremsbelag ist auf der gegenüberliegenden Seite der Bremsscheibe am Bremssattel fixiert. Durch Ausfahren des Kolbens wird der hierin befestigte Bremsbelag an der Bremsscheibe zur Anlage gebracht und über die Verschiebbarkeit des Bremssattels über die beiden Stehbolzen wird auch der bremssattelseitige Bremsbelag mit der Bremsscheibe in Kontakt gebracht, so dass ein Abbremsen der Bremsscheibe und damit der Achse oder des Rades eines Schienenfahrzeuges durchführbar ist.

Nachteilhaft ist, dass mit dieser Lösung nur ein Verschieben des Sattels in Bremsbetätigungsrichtung (Y-Achse) möglich ist, welche parallel zur Radachse verläuft. Im Zusammenwirken zwischen einem Bremssattel und einer Bremsscheibe treten jedoch auch bezüglich anderer Raumachsen konstruktionsbedingt durch Federstufen im Drehgestell Verschiebungen oder Verdrehungen auf, welche durch diese recht starre Bremssattelaufhängung nicht ausgleichbar sind. Dies beeinträchtigt zum Einen die Bremsleistung und zum Anderen werden die Bauteile der Bremse ungleichmäßig und damit ungünstig belastet.

DE-35 40 810 zeigt eine gattungsgemäße Sattelbremse

Wie aus dem allgemeinen Stand der Technik bekannt ist, wird zur Lösung dieses Problems eine elastische Bremssattelaufhängung eingesetzt. Neben einer Verschiebbarkeit des Bremssattels in der vorstehend definierten Y-Richtung lässt die elastische Bremssattelaufhängung auch einen Schwenkwinkel des Bremssattels um die beiden anderen Raumachsen, nämlich die X-Achse und die Z-Achse zu. Hierdurch kann sich der Bremssattel ideal an Lageänderungen der Bremsscheibe anpassen. Die Verschwenkbarkeit des Bremssattels setzt beim Stand der Technik jedoch eine Momentenstütze voraus, die zwischen dem Bremssattel und dem Fahrgestell verlaufend in der Regel zwei Gelenkköpfe aufweist. Insgesamt benötigt diese technische Lösung einer elastischen Bremssattelaufhängung wegen der Momentenstütze jedoch viel Bauraum.

Es ist daher die Aufgabe der vorliegenden Erfindung, eine Sattelbremse für ein Schienenfahrzeug zu schaffen, welche eine platzsparende, mehrachsig elastische Bremssattelaufhängung ermöglicht.

Die Aufgabe wird ausgehend von einer Sattelbremse gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die beiden Schwimmbolzen zur elastischen Aufhängung des Bremssattels über je zwei beabstandet zueinander angeordnete Lagerstellen derart am Bremssattelrahmen befestigt sind, dass der Bremssattel im eingebremsten Zustand eine durch ein Kippen der Bremsscheibe um einen Winkel α verursachte Schwenkbewegung um die X-Achse sowie die Z-Achse vollführt.

Mit anderen Worten wird eine elastische Bremssattelaufhängung geschaffen, indem die beiden den Bremssattel tragenden Schwimmbolzen so gestaltet sind, dass diese aufgrund ihrer durch je zwei spezielle Lagerstellen sowie der speziellen Form erzeugten Elastizität eine definierte Schwenkbewegung des eingebremsten Bremssattels um die X-Achse und Z-Achse erlauben.

Der Vorteil der erfindungsgemäßen Lösung liegt insbesondere darin, dass eine hohe Elastizität dadurch erreicht wird, dass neben dem üblichen Verschieben des Bremssattels in Y-Richtung auch eine zweiachsige Schwenkbewegung bezüglich der anderen beiden Raumachsen (X- und Z-Achse) ermöglicht wird, indem diese Elastizität aus den Lagerstellen einerseits und der gezielten Verformung der Bolzen andererseits gewonnen wird. Dies gestattet durch Verzicht auf eine ansonsten übliche Momentenstütze eine recht kompakte Bauform.

Gemäß einer die Erfindung verbessernden Maßnahme wird vorgeschlagen, die jeweils zweiten Lagerstellen beider Schwimmbolzen in Y-Richtung ortsnah zur Mitte der Bremsscheibe anzuordnen. Dies bedeutet, dass die jeweils zweiten Lagerstellen pro Schwimmbolzen zumindest näher zur Mitte der Bremsscheibe angeordnet sind, als die ersten Lagerstellen der Schwimmbolzen. Ganz vorzugsweise liegen die zweiten Lagerstellen weniger als 10 mm von der Mitte der Bremsscheibe entfernt. Die Mitte der Bremsscheibe ergibt sich durch die auf halber Bremsscheibendicke liegende Symmetrielinie. Durch diese Anordnung wird die Umfangskraft, hervorgerufen durch das Bremsmoment des eingebremsten Bremssattels, mit hoher Steifigkeit übertragen.

Gemäß einer weiteren, die Erfindung verbessernden Maßnahme wird vorgeschlagen, dass die jeweils ersten Lagerstellen der Schwimmbolzen so weit von der Mitte der Bremsscheibe entfernt angeordnet sind, dass die Schwimmbolzen an der ersten Lagerstelle nur noch eine geringe Steifigkeit aufweisen. Hierdurch wird die Möglichkeit geschaffen, dass Schwenkbewegungen des eingebremsten Bremssattels um die Z-Achse mit geringer Steifigkeit ertragen werden.

Gemäß einer anderen, die Erfindung verbessernden Maßnahme wird vorgeschlagen, dass Schwenkbewegungen des eingebremsten Bremssattels um die X-Achse aufgrund eines gewählten Lagerspiels in der zweiten Lagerstelle ermöglicht werden. Somit reicht allein ein fertigungstechnisch in einfacher Weise erzeugbares Lagerspiel in der zweiten Lagerstelle aus, um diese gewünschte Schwenkbewegung zu realisieren.

Die Umfangskraft hervorgerufen durch das Bremsmoment des eingebremsten Bremssattels sollte mit hoher Steifigkeit übertragen werden. Dies wird dadurch erreicht, dass die Schwimmbolzen an den jeweils zweiten Lagerstellen einen größeren Querschnitt aufweisen als an den jeweils ersten Lagerstellen. Ein mit zwei verschiedenen Durchmessern für die beiden Lagerstellen ausgestatteter Schwimmbolzen lässt sich fertigungstechnisch durch Drehen fertigen. Die Übergänge zwischen den Bereich unterschiedlicher Durchmesser sollten dabei konisch ausgebildet sein, um eine maximale Festigkeit der beim Bremsen hochbeanspruchten Schwimmbolzen sicherzustellen.

Weiterhin wird vorgeschlagen, dass die Schwimmbolzen zwischen den beiden Lagerstellen mit einer deutlich niedrigeren Steifigkeit ausgebildet sind, als zwischen seiner endseitigen Einspannung und der dieser benachbarten zweiten Lagerstelle. Hierdurch wird der Vorteil erzielt, dass Schwenkbewegungen des eingebremsten Bremssattels um die X-Achse und Z-Achse mit relativ geringer Steifigkeit ertragen werden.

Vorzugsweise sollte die Sattelposition des gelösten Bremssattels ausreichend zentriert sein, um insbesondere ein ungewolltes Anliegen der Bremsbeläge an der Bremsscheibe zu verhindern. Dies wird gemäß eines anderen Aspekts der Erfindung vorzugsweise dadurch erreicht, dass die Steifigkeit der Schwimmbolzen zwischen den beiden Lagerstellen zur Zentrierung noch groß genug ist und der Sattelschwerpunkt sich in Y-Richtung zwischen den beiden Lagerstellen befindet.

Die erfindungsgegenständlichen Lagerstellen des Schwimmbolzens können auf verschiedene Weise gestaltet werden. Vorzugsweise reicht die Gestaltung als fertigungtechnisch einfach umzusetzende zylindrische Lagerbuchsen aus. Es ist jedoch auch denkbar, aber nicht notwendig, die Lagerstellen als kugelige Gelenklager auszubilden. Ferner ist es vorteilhaft, hierfür Elastomerlager - vorzugsweise sogenannte Silentbuchsen - zu verwenden.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig.1: eine perspektivische Darstellung einer Sattelbremse für ein Schienenfahrzeug,
- Fig.2: einen Teilschnitt durch die Sattelbremse nach Fig.1, und
- Fig.3: eine Draufsicht auf den Bereich des Bremssattels der Sattelbremse nach Fig.1.

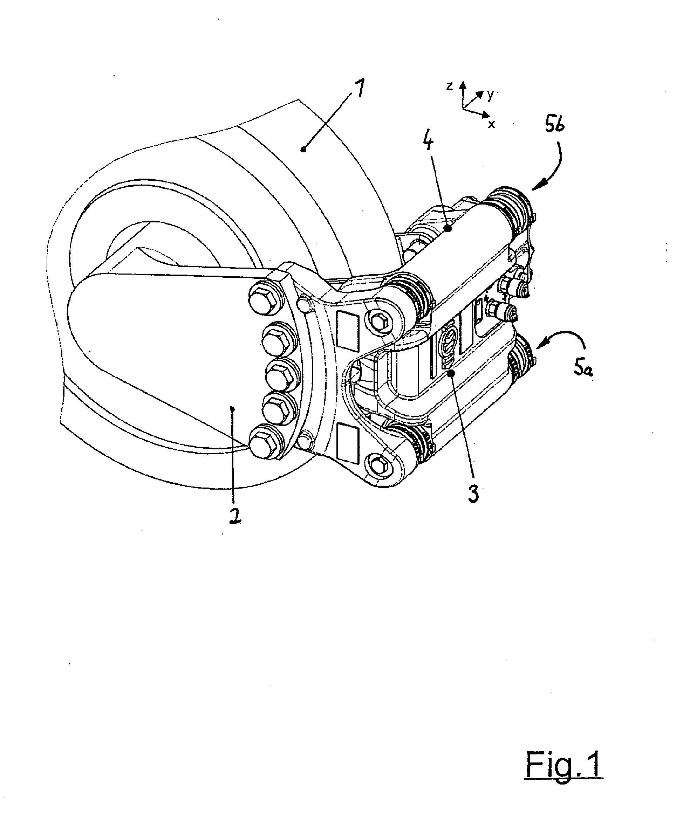

Gemäß Fig.1 umfasst die Sattelbremse eine drehfest an einem - hier nicht weiter dargestellten - Rad und mit diesem insoweit rotierende Bremsscheibe 1, welche mit einem ortsfest seitens eines Fahrgestells 2 angeordneten Bremssattel 3 zur Bildung einer Bremse zusammenwirkt. Zum Ausgleich von Relativbewegungen zwischen der Befestigungsstelle des Bremssattels 3 und den Reibflächen der Bremsscheibe 1 ist der Bremssattel 3 nicht fest mit dem Fahrgestell 2 verbunden, sondern über ein Paar von mit einem Bremsssattelrahmen 4 zusammenwirkenden Schwimmbolzen 5a und 5b. Die Schwimmbolzen 5a und 5b verlaufen in der Y-Richtung bezüglich des abgebildeten Raumkoordinatensystems.

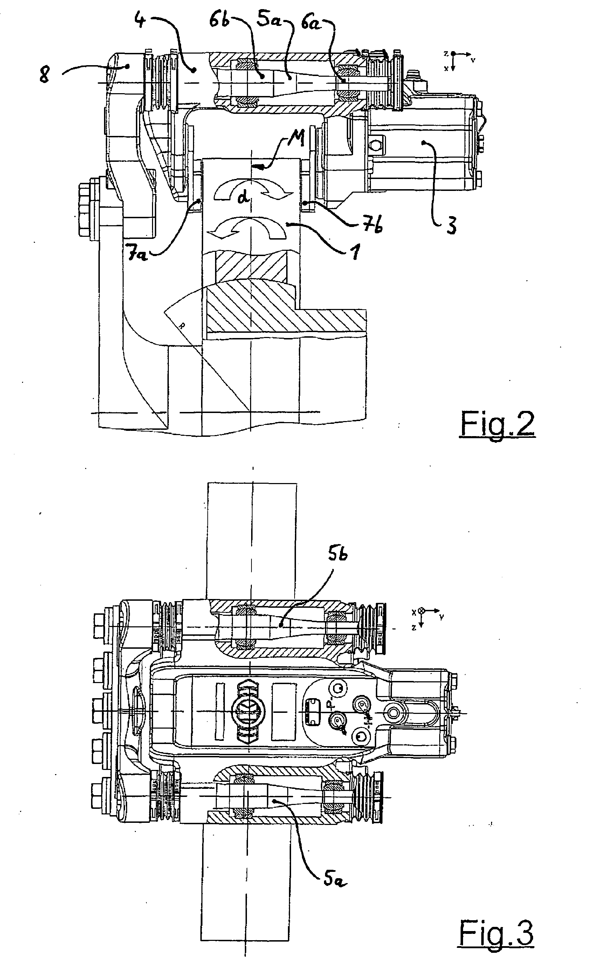

Gemäß Fig.2 ist jeder Schwimmbolzen 5a (exemplarisch) zur elastischen Aufhängung des Bremssattels 3 über je zwei beabstandet zueinander angeordnete Lagerstellen 6a und 6b derart am Bremssattelrahmen 4 befestigt, dass der Bremssattel 3 im eingebremsten Zustand eine durch ein Kippen der Bremsscheibe 1 um den dargestellten Winkel α verursachte Schwenkbewegung um die X-Achse sowie Z-Achse des angedeuteten Raumkoordinatensystems vollführt.

Im eingebremsten Zustand des Bremssattels 3 befinden sich die beiden gegenüberliegend der Bremsscheibe 1 angeordneten Bremsbeläge 7a und 7b in Anlage an der Bremsscheibe 1. Die zweite Lagerstelle 6b des Schwimmbolzens 5a ist in Y-Richtung gesehen recht ortsnah zur Mitte M der Bremsscheibe 1 angeordnet. Zur hochsteifen Übertragung der durch das Bremsmoment im eingebremsten Zustand des Bremssattels 3 hervorgerufenen Umfangskraft weist die jeweils zweite Lagerstelle 6b des Schwimmbolzens 5a einen größeren Querschnitt auf, als die jeweils erste Lagerstelle 6a.

Im Bereich zwischen den Lagerstellen 6a und 6b ist der Schwimmbolzen 5a mit einer niedrigeren Steifigkeit ausgeführt als im Bereich zwischen der jeweils zweiten Lagerstelle 6b größeren Durchmessers und einer hierzu benachbarten endseitigen Einspannstelle 8. Die Einspannstelle 8 ist ortsfest zum Fahrgestell angeordnet.

Gemäß Fig.3 sind die beiden Schwimmbolzen 5a und 5b, welche die elastische Aufhängung des Bremssattels 3 gewährleisten, identisch aufgebaut und gelagert, so dass die vorstehende Detailbeschreibung für beide Schwimmbolzen 5a und 5b zutrifft.

Die Erfindung ist nicht beschränkt auf das vorstehend beschriebene bevorzugte Ausführungsbeispiel. Es sind vielmehr auch Abwandlungen denkbar, welche vom Schutzbereich der nachfolgenden Ansprüche mit umfasst sind. So ist es beispielsweise auch möglich, die Lagerstellen 6a und 6b jedes Schwimmbolzens 5a bzw. 5b als zylindrische und spielbehaftete Lagerbuchsen auszubilden.

### Bezugszeichenliste

- 1: Bremsscheibe
- 2: Fahrgestell
- 3: Bremssattel
- 4: Bremssattelrahmen
- 5: Schwimmbolzen
- 6: Lagerstelle
- 7: Bremsbelag
- 8: Einspannstelle

- M: Mitte
- α: Winkel

## Patentansprüche

1. Sattelbremse für ein Schienenfahrzeug, umfassend eine drehfest mit einem Rad rotierende Bremsscheibe (1), die mit einem seitens des Fahrgestells (2) angeordneten Bremssattel (3) zum druckmittelunterstützten Bremsen zusammenwirkt, der zum Ausgleich von Relativbewegungen zwischen der Befestigungsstelle des Bremssattels (3) und den Reibflächen der Bremsscheibe (1) mit mindestens zwei parallel zueinander beabstandeten Schwimmbolzen (5a, 5b) über einen Bremssattelrahmen (4) entlang einer parallel zur Radachse verlaufenden Y-Achse verschiebbar angebracht ist,
**dadurch gekennzeichnet, dass** jeder Schwimmbolzen (5a, 5b) zur elastischen Aufhängung des Bremssattels (3) über je zwei beabstandet zueinander angeordnete Lagerstellen (6a, 6b) derart am Bremssattelrahmen (4) befestigt ist, dass der Bremssattel (3) im eingebremsten Zustand eine durch ein Kippen der Bremsscheibe (1) um einen Winkel (α) verursachte Schwenkbewegung um die X-Achse sowie die Z-Achse vollführt, wobei zur hochsteifen Übertragung der durch das Bremsmoment im eingebremsten Zustand des Bremssattels (3) hervorgerufenen Umfangskraft die zweiten Lagerstellen (6b) der Schwimmbolzen (5a; 5b) in Y-Richtung ortsnah zur Mittellinie (M) der Bremsscheibe (1) angeordnet sind, wobei ferner zur hochsteifen Übertragung der durch das Bremsmoment im eingebremsten Zustand des Bremssattels (3) hervorgerufenen Umfangskraft die jeweils zweite Lagerstelle (6b) der Schwimmbolzen (5a) einen größeren Querschnitt aufweist als die jeweils erste Lagerstelle (6a).

2. Sattelbremse nach Anspruch 1,
**dadurch gekennzeichnet, dass** zur geringsteifen Übertragung der durch das Bremsmoment im eingebremsten Zustand des Bremssattels (3) hervorgerufenen Schwenkbewegung um die Z-Achse die jeweils erste Lagerstelle (6a) der Schwimmbolzen (5a; 5b) so weit von der Mittellinie (M) der Bremsscheibe (1) entfernt angeordnet ist, dass die Schwimmbolzen (5a; 5b) an der jeweiligen Lagerstelle (6a) eine minimale Steifigkeit aufweisen.

3. Sattelbremse nach einem der Ansprüche 1 bis 2,
**dadurch gekennzeichnet, dass** im eingebremsten Zustand des Bremssattels (3) aufgrund eines Lagerspiels in der jeweils zweiten Lagerstelle (6b) Schwenkbewegungen um die X-Achse der Schwimmbolzens (5a) auftreten.

4. Sattelbremse nach Anspruch 1,
**dadurch gekennzeichnet, dass** zur geringsteifen Ausführung der Schwenkbewegung um die X- und Z-Achse der Schwimmbolzen (5a) im Bereich zwischen den Lagerstellen (6a, 6b) mit einer niedrigeren Steifigkeit ausgeführt ist als im Bereich zwischen der jeweils zweiten Lagerstelle (6b) größeren Durchmessers und einer hierzu benachbarten endseitigen Einspannstelle (8).

5. Sattelbremse nach Anspruch 1,
**dadurch gekennzeichnet, dass** sich zur Zentrierung des Bremssattels (3) im gelösten Zustand der Sattelschwerpunkt in Y-Richtung zwischen beiden Lagerstellen (6a, 6b) des Schwimmbolzens (5a) befindet.

6. Sattelbremse nach Anspruch 1,
**dadurch gekennzeichnet, dass** die Lagerstellen (6a, 6b) als kugelige Gelenklager ausgebildet sind.

7. Sattelbremse nach Anspruch 1,
**dadurch gekennzeichnet, dass** die Lagerstellen (6a, 6b) als zylindrische und spielbehaftete Lagerbuchsen ausgebildet sind.

8. Sattelbremse nach Anspruch 1,
**dadurch gekennzeichnet, dass** die Lagerstellen (6a, 6b) als Elastomerlager ausgebildet sind.

9. Schienenfahrzeug mit einem druckmittelbetriebenen Bremssystem, dessen Achsen oder Räder mit mindestens einer Sattelbremse nach einem der vorstehenden Ansprüche ausgerüstet ist.

## Claims

1. Calliper disc brake for a rail vehicle, comprising a brake disc (1) revolving in fixed relation with a wheel, which cooperates with a brake calliper (3) disposed on the side of the bogie (2) for braking action supported by a pressurised medium, which calliper is mounted for displacement along a Y-axis extending in parallel with the wheel axle by means of at least two floating pins (5a, 5b) spaced from each other in parallel relationship for compensation of relative movements between the fastening site of said brake calliper (3) and the friction surfaces of said brake disc (1),
**characterised in that** each Floating pin (5a, 5b) is fastened via two respective bearing sites (6a, 6b), which are disposed at a spacing from each other, on the brake calliper frame (4) for resilient suspension of said brake calliper (3) in such a manner that in the braked condition said brake calliper (3) performs a pivoting movement about the X-axis as well as the Z-axis, which is caused by a tilting movement of said brake disc (1) about an angle (α), with the second bearing sites (6b) of said floating pins (5a; 5b) being arranged along the Y-direction in local proximity to the centre line (M) of said brake disc (1) for a highly rigid transmission of the peripheral force induced by the braking momentum in the braked condition of said brake calliper (3), wherein moreover, for a highly rigid transmission of the peripheral force induced by the braking momentum in the braked condition of said brake calliper (3), said respective second bearing site (6b) of said floating pins (5a) presents a larger cross-sectional area than the respective first bearing site (6a).

2. Calliper disc brake according to Claim 1,
**characterised in that** for a transmission at low rigidity of the pivoting movement about the Z-axis, which is caused by the braking momentum in the braked condition of said brake calliper (3), said respective first bearing site (6a) of said floating pins (5a; 5b) is disposed at such a distance from said centre line (M) of said brake disc (1) that said floating pins (5a; 5b) present a minimum rigidity at the respective bearing site (6a).

3. Calliper disc brake according to any of the Claims 1 to 2,
**characterised in that** pivoting movements about the X-axis of said floating pins (5a) occur in the braked condition of said brake calliper (3) on account of a bearing clearance in said respective second bearing site (6b).

4. Calliper disc brake according to Claim 1,
**characterised in that** for execution of said pivoting movement about said X-and Z-axes, said floating pin (5a) is designed at a lower rigidity in the region between said bearing sites (6a, 6b) than in the region between said respective second bearing site (6b) having the larger diameter and a terminal-side clamping site (8) adjacent thereto.

5. Calliper disc brake according to Claim 1,
**characterised in that** the centre of gravity of said calliper is located along the Y-direction between both bearing sites (6a, 6b) of said floating pin (5a) for centring said brake calliper (3) in the released state.

6. Calliper disc brake according to Claim 1,
**characterised in that** said bearing sites (6a, 6b) are configured as spherical self-aligning plain bearings.

7. Calliper disc brake according to Claim 1,
**characterised in that** said bearing sites (6a, 6b) are configured as cylindrical bearing bushes with backlash.

8. Calliper disc brake according to Claim 1,
**characterised in that** said bearing sites (6a, 6a) are designed s elastomer bearings.

9. Rail vehicle comprising a brake system operated by a pressurised medium, having axles or wheels equipped with at least one calliper disc brake according to any of the preceding Claims.

## Revendications

1. Frein à étrier pour un véhicule ferroviaire, comprenant un disque de frein (1) en rotation à relation invariable à une roué, qui interagit avec un étrier de frein (3) disposé du côté du bogie (2) pour une action de freinage assistée par un milieu sous pression, lequel étrier est monté pour un déplacement le long d'un axe Y, qui s'étend en parallèle à l'essieu de la roué, moyennant d'au moins deux boulons flottants (5a, 5b) espacés l'un de l'autre en relation parallèle pour la compensation des mouvements relatifs entre le point de fixation dudit étrier de frein (3) et les surfaces de frottement dudit disque de frein (1),
**caractérisé en ce que** chaque Boulon flottant (5a, 5b) est fixé via deux points d'appui respectifs (6a, 6b), qui sont disposes à un écart l'un de l'autre, au cadre de l'étrier de frein (4) pour une suspension élastique dudit étrier de frein (3) d'une telle manière, qu'en l'état freiné ledit étrier de frein (3) réalise un mouvement pivotant autour de l'axe X ainsi que de l'axe Z, qui est induit par un mouvement basculant dudit disque de frein (1) par un angle (α), aux-dits deuxièmes points d'appui (6b) desdits boulons flottants (5a; 5b) étant disposes le long de la direction Y à proximité locale à la ligne médiane (M) dudit disque de frein (1) pour une transmission extrêmement rigide de l'effort périphérique induit par le moment de freinage en l'état freiné dudit étrier de frein (3), dans lequel, au plus, ledit deuxième point d'appui respectif (6b) desdits boulons flottants (5a) présente une aire de la section plus grande que le premier point d'appui respectif (6a) pour une transmission extrêmement rigide de l'effort induit par le moment de freinage en l'état freiné dudit étrier de frein (3).

2. Frein à étrier selon la revendication 1,
**caractérisé en ce que** pour une transmission à basse rigidité du mouvement pivotant autour de l'axe Z, qui est induit par le moment de freinage en l'état freiné dudit étrier de frein (3), ledit premier point d'appui respectif (6a) desdits boulons flottants (5a; 5b) est disposé à une telle distance de ladite ligne médiane (M) dudit disque de frein (1), que lesdits boulons flottants (5a; 5b) présentent une rigidité minimale au point d'appui (6a) respectif.

3. Frein à étrier selon une quelconque des revendications 1 to 2,
**caractérisé en ce que** des mouvements pivotants autour de l'axe X desdits boulons flottants (5a) apparaissent en l'état freiné dudit étrier de frein (3) en vertu d'un jeu de coussinet dans ledit deuxième point d'appui (6b) respectif.

4. Frein à étrier selon la revendication 1,
**caractérisé en ce que** pour la réalisation du mouvement pivotant autour des axes X et Z ledit boulon flottant (5a) dans la zone entre lesdits points d'appui (6a, 6b) est conçu à une plus petite rigidité que dans la zone entre ledit deuxième point d'appui respectif (6b) à un plus grand diamètre et un point de serrage (8) du côté terminal y adjacent.

5. Frein à étrier selon la revendication 1,
**caractérisé en ce que** le centre de gravité dudit étrier se trouve le long de la direction Y entre lesdits deux points d'appui (6a, 6b) dudit boulon flottant (5a) pour le centrage dudit étrier de frein (3) en l'état desserré.

6. Frein à étrier selon la revendication 1,
**caractérisé en ce que** lesdits points d'appui (6a, 6b) sont configures sous forme des articulations sphériques à rotule.

7. Frein à étrier selon la revendication 1,
**caractérisé en ce que** lesdits points d'appui (6a, 6b) sont configures sous forme des coussinets cylindriques à jeu.

8. Frein à étrier selon la revendication 1,
**caractérisé en ce que** lesdits points d'appui (6a, 6a) sont conçus sous forme des paliers en élastomère.

9. Véhicule ferroviaire comprenant un système de freinage commandé par un milieu sous pression, équipé des essieux ou roués dotes d'au moins un frein à étrier selon une quelconque des revendications précédentes.
